# EUROPÄISCHE PATENTSCHRIFT

(11) **EP 2 668 122 B1**
(45) Veröffentlichungstag und Bekanntmachung des Hinweises auf die Patenterteilung: **31.12.2014**
(21) Anmeldenummer: 12703425.4
(22) Anmeldetag: 24.01.2012
(51) Int. Cl.: B65G 21/20

(54) **FÖRDEREINRICHTUNG FÜR ZYLINDRISCHE KÖRPER, MIT IN FÖRDERRICHTUNG GENEIGTEN ABLAUFSCHIENEN**
CONVEYING DEVICE FOR CYLINDRICAL MEMBERS, COMPRISING RUNNING RAILS INCLINED IN THE DIRECTION OF TRAVEL
DISPOSITIF DE TRANSPORT POUR CORPS CYLINDRIQUES, COMPRENANT DES RAILS DE ROULEMENT INCLINÉS DANS LA DIRECTION DE TRANSPORT

(30) Priorität: 28.01.2011 CH 158112011
(43) Veröffentlichungstag der Anmeldung: 04.12.2013
(73) Patentinhaber: M. Tanner AG, 8308 Illnau (CH)
(72) Erfinder: TANNER, Marcel, CH-8303 Bassersdorf (CH)
(74) Vertreter: Schaad, Balass, Menzl & Partner AG
(86) Internationale Anmeldenummer: PCT/CH2012/000016
(87) Internationale Veröffentlichungsnummer: WO 2012/100357

(56) Entgegenhaltungen:
- WO-A2-2007/028627
- DE-A1-102009 016 593
- DE-U1-202006 012 914

## Beschreibung

Fördereinrichtung für zylindrische Körper, wie Vorformlinge für Hohlkörper, in einer Transportstrecke, wobei die Vorformlinge mindestens einen Kopf mit einem Kragen aufweisen, die Fördereinrichtung zwei parallel zueinander verlaufende, mit Abstand zueinander angeordnete und in Förderrichtung geneigte Ablaufschienen umfasst, diese Ablaufschienen nach oben gerichteten Flächen aufweisen, welche eine Gleit- und Auflagefläche für eine untere Fläche der Kragen der Vorformlinge bilden und über den Gleit- und Auflageflächen der beiden Ablaufschienen und mit Abstand zu diesen eine Führungsschiene fest angeordnet ist, welche eine Höhenführung für den Kopf der Vorformlinge bildet.

Üblicherweise werden zylindrische Körper, wie Vorformlinge von PET-Flaschen, auch Preforms genannt, als Stückgut ungeordnet in grossen Behältern angeliefert und über eine Beschickungseinrichtung zu einer Vereinzelungseinrichtung geführt. Die Vereinzelungseinrichtung richtet die Vorformlinge auf und bildet eine Einzelreihe der Vorformlinge, welche die Vereinzelungseinrichtung beispielsweise über eine in Förderrichtung geneigte bzw. schräg nach unten gerichtete Gleitschienenführung, auch Ablaufschienen genannt, verlässt. Auf diesen Ablaufschienen gleiten die Vorformlinge, durch die Schwerkraft bedingt, nach unten. Von da gelangen die Vorformlinge zu Prüf- und Fördereinrichtungen und schliesslich zu einer Streckblasmaschine, wo ihr zylindrischer Körper zu einer gewünschten Behälter- oder Flaschenform aufgeblasen wird. Auch zwischen der Prüfeinrichtung und der Streckblasmaschine ist häufig eine, in Förderrichtung geneigte, Fördereinrichtung mit so genannten Ablaufschienen angeordnet.

Die Vorformlinge weisen je nach Endprodukt, d.h. Form und Volumen des zu produzierenden Hohlkörpers, zum Beispiel einer Flasche, verschiedene Formen und Grössen auf. Die Vorformlinge weisen typischerweise an einem oberen, offenen Ende einen Kopf mit einem Gewindestutzen und einem Kragen oder Tragring auf, welcher einen grösseren Durchmesser als der übrige untere Teil aufweist. Für den störungsfreien Transport bzw. die Förderung der Vorformlinge mittels Fördereinrichtungen, z. B. mithilfe von geneigten Ablaufschienen, spielen die Dimensionen des Kopfes, die Form des Körpers aber auch das Gewicht und die Lage des Schwerpunktes eine wesentliche Rolle. Aus Kostengründen, aber auch um Rohstoffe einzusparen, besteht die Tendenz, die aus den Vorformlingen geformten Hohlkörper, insbesondere Flaschen, dünnwandiger zu gestalten und auch die Grösse der Kopfteile zu reduzieren und anders zu gestalten. Dadurch werden die Vorformlinge kleiner und leichter und die Form- und Gewichtsverhältnisse zwischen dem oberen Kopfteil und dem unteren Teil der Vorformlinge verändern sich gegenüber den bisher benutzten Vorformlingen. Dies hat zur Folge, dass bei den bis heute verwendeten Fördereinrichtungen mit geneigten Ablaufschienen vermehrt Störungen auftreten und dadurch der Transportvorgang der Vorformlinge durch die Produktionsanlage gestört und immer wieder unterbrochen wird. Die Folge davon sind Produktionsausfälle und erhöhte Wartungskosten.

Bei Fördereinrichtungen mit zwei parallel zueinander verlaufenden, mit Abstand zueinander angeordneten und in Fördereinrichtung geneigten Ablaufschienen rutschen die Vorformlinge durch die Wirkung der Schwerkraft vom oberen Ende zum unteren Ende der Ablaufschienen. Die Vorformlinge liegen dabei mit dem Kragen auf den Ablaufschienen auf und der untere Teil hängt zwischen den Ablaufschienen. Wenn die Einrichtung, welche auf die Ablaufschienen folgt, die Vorformlinge intermittierend, d.h. nicht gleichförmig, übernimmt, so ergeben sich Unterbrüche im Ablauf dieser Rutschbewegung und die Vorformlinge stossen gegeneinander. Bereits bei den bisher üblichen, bekannten Vorformlingen hatte dies zur Folge, dass sich diese von den Ablaufschienen abheben oder kippen konnten. Zur Vermeidung dieser Störungen wurde in bekannten Produktionsanlagen und deren Fördereinrichtungen, wie z.B inder DE 10 2009 016 593 A1, die eine Fördereinrichtung nach dem Oberbegriff des Anspruchs 1 offenbart, mit Ablaufschienen bereits vorgeschlagen, über den Ablaufschienen und mit Abstand dazu eine starre Führungsschiene anzuordnen, welche als Höhenführung für die Vorformlinge dient. Diese Führungsschiene weist dabei gegenüber dem oberen Ende des Kopfes der in den Ablaufschienen hängenden Vorformlinge einen geringen Abstand auf, wodurch die Anzahl von Störungen bei den bisher üblichen Vorformlingen reduziert werden konnte. Werden in einer derartigen Anordnung jedoch die neu zur Anwendung gelangenden, leichteren und kleineren Vorformlinge gefördert und transportiert, so treten erneut häufige Störungen auf und zwar in einem Ausmass, welches nicht akzeptierbar ist. Die leichteren Vorformlinge verklemmen sich dabei zwischen den Ablaufschienen und der Führungsschiene und ihr Eigengewicht ist zu klein, um sie selbsttätig wieder in die normale Transportposition zurückzubringen. Dadurch wird der Förderstrom von Vorformlingen unterbrochen und die gesamte Anlage wird stillgelegt. Es wurde auch versucht, durch Vibrieren der Ablaufschienen die Störungen zu beheben, was aber zu anderen Störungen führte und keinen genügenden Erfolg brachte. Die verklemmten Vorformlinge müssen manuell gelöst werden, was abgesehen vom Produktionsunterbruch sehr aufwendig ist.

Es ist deshalb Aufgabe der Erfindung, eine Fördereinrichtung mit geneigten Ablaufschienen zu schaffen, mit welcher auch Vorformlinge, für leichtere und/oder kleinere Hohlkörper, insbesondere Kunststoff-Flaschen, welche die oben beschriebenen Störungen verursachen, gefördert und transportiert werden können, und dabei die Anzahl der Störungen bzw. Transportunterbrüche auf ein Minimum reduziert wird.

Diese Aufgabe wird in Verbindung mit dem Oberbegriff des Patentanspruches 1 erfindungsgemäss dadurch gelöst, dass in der Führungsschiene mindestens ein bewegliches Zwischenelement geführt ist, dieses Zwischenelement etwa rechtwinklig zu den Gleit- und Auflageflächen der Ablaufschienen bewegbar ist und ein Teilbereich dieses Zwischenelementes in den Zwischenraum, zwischen den Gleit-und Auflageflächen der Ablaufschienen und der Führungsschiene, ragt und ein Führungselement für den Kopf der Vorformlinge bildet und dass ein Kraftelement mit einer Kraftkomponente, welche in Richtung des Zwischenraumes gerichtet ist, auf das Zwischenelement einwirkt.

Mit dieser erfindungsgemässen Einrichtung wird zuverlässig verhindert, dass die Vorformlinge zwischen den Ablaufschienen und dem in die Führungsschiene eingebauten Zwischenelement festklemmen und/oder festsitzen. Die Anzahl von Störungen bzw. Transportunterbrüchen wird bei Einsatz dieser Einrichtung minimiert. Vorformlinge, welche angehoben werden oder gegenüber den Auflageflächen der Ablaufschienen kippen, können das Zwischenelement gegen die auf dieses Zwischenelement wirkende Kraftkomponente anheben und sie werden durch diese Kraftkomponente auch wieder in die normale Transportposition zurück gedrückt. Durch diese Rückführkraft und die Bewegung der benachbarten Vorformlinge fügen sich die Vorformlinge wieder in die Transportreihe ein und eine Störung wird vermieden.

Eine vorteilhafte Ausbildung des Erfindungsgegenstandes sieht vor, dass das Kraftelement, welches die Kraftkomponente erzeugt, die Schwerkraft und/oder ein Federelement ist. Überraschenderweise hat sich gezeigt, dass die Schwerkraft, welche bei geneigten Ablaufschienen auf das bewegliche Zwischenelement in der starren Führungsschiene wirkt, genügt, um die vorteilhafte Wirkung gemäss der Erfindung zu bewirken. Durch das Gewicht und die Form des beweglichen Zwischenelementes kann die aus der Schwerkraft resultierende Kraftkomponente, welche das Zwischenelement in Richtung der Auflageflächen der Ablaufschienen drückt, an die Erfordernisse angepasst werden. Dabei wird die über die Kraftkomponente wirkende Kraft so gewählt, dass das Zwischenelement durch fehlerhafte Bewegungen eines Vorformlings leicht angehoben werden kann, aber gleichzeitig und anschliessend dieser Vorformlinge mit genügender Kraft wieder in die Normalposition zurück gedrängt wird. Sollte die Schwerkraft nicht genügen, um die gewünschte Kraftkomponente zu erzeugen, so kann zusätzlich eines oder mehrere Federelemente vorgesehen werden, welche eine zusätzliche, auf das Zwischenelement wirkende Kraftkomponente in Richtung der Auflageflächen der Ablaufschienen erzeugen.

Eine weitere Ausbildung der Erfindung sieht vor, dass der Abstand zwischen den Gleit- und Auflageflächen der Ablaufschienen und einer gegen die Ablaufschienen gerichteten Gleitfläche am Zwischenelement mindestens 0,1 mm grösser ist als die Höhe des Kopfes der Vorformlinge zwischen der unteren Fläche des Kragens und einer oberen Endfläche des Kopfes. Durch diese Anordnung wird gewährleistet, dass im Normalfall keine zusätzlichen Reibungskräfte auf die Vorformlinge in der Transportreihe ausgeübt werden. Zudem resultieren aus geringfügigen Lageabweichungen der Vorformlinge, welche auch keine Störungen des Transportablaufes verursachen, keine Kontakte mit dem beweglichen Zwischenelement in der Führungsschiene.

Erfindungsgemäss wird weiter vorgeschlagen, dass in einer Ausgangsposition des Zwischenelementes der freie Abstand zwischen den Gleit- und Auflageflächen der Ablaufschienen und der Führungsschiene 1 mm grösser ist als der Abstand zwischen den Gleit- und Auflageflächen und einer gegen die Ablaufschienen gerichteten Gleitfläche am Zwischenelement. Der Vorteil dieser Anordnung besteht darin, dass sichergestellt ist, dass der Kopf der Vorformlinge bei fehlerhaften Bewegungen immer das bewegliche Zwischenelement und nicht die starre Führungsschiene berührt. In der Ausgangsposition befindet sich das Zwischenelement dann, wenn kein Kontakt mit einem Kopf eines Vorformlings besteht, welcher das Zwischenelement anheben würde.

Eine weitere zweckmässige Ausgestaltung des Erfindungsgegenstandes sieht vor, dass sich ein Zwischenelement oder mehrere Zwischenelemente über die ganze Länge der Führungsschiene erstreckt oder erstrecken. Bei kurzen Ausführungen von Ablaufschienen kann die über den Ablaufschienen angeordnete Führungsschiene ein einziges Zwischenelement aufweisen. Dieses erstreckt sich dann im Wesentlichen über die ganze Führungsschiene, wobei an den beiden Endbereichen der Führungsschiene Endstücke angeordnet sein können. Bei längeren Ablaufschienen mit einer entsprechend langen Führungsschiene ist es zweckmässig, mehrere aufeinanderfolgende Zwischenelemente anzuordnen. Dabei kann deren Länge an die Eigenheiten der transportierten Vorformlinge und die geometrische Form der Ablaufschienen, d.h. der Fördereinrichtung, angepasst werden. Bei Bedarf kann zusätzlich auch die starre Führungsschiene in Förderrichtung unterteilt sein.

Erfindungsgemäss wird weiter vorgeschlagen, dass an der Führungsschiene mindestens ein Führungszapfen und an jedem Zwischenelement mindestens eine Führungsbohrung oder eine Führungsnute angeordnet sind, welche zusammenwirken und das Zwischenelement in der Förderrichtung positionieren. Da die Ablaufschienen und die zugehörige Führungsschiene in Förderrichtung geneigt angeordnet sind, rutschen auch die beweglichen Zwischenelemente gegen das untere Ende der Ablaufschienen. Diese erfindungsgemässe Lösung verhindert diese Rutschbewegung der Zwischenelemente gegen das untere Ende und definiert die Position der Zwischenelemente gegenüber der Führungsschiene. Wenn nur ein Zwischenelement vorhanden ist, verhindert diese Anordnung, dass die untere Stirnfläche des Zwischenelements an einem unteren Endstück der Führungsschiene ansteht und dadurch verklemmen kann. Wenn mehrere aufeinanderfolgende Zwischenelemente vorhanden sind, kann mittels dieser Anordnung die Position jedes einzelnen Zwischenelementes festgelegt und zwischen den benachbarten Endflächen der Zwischenelemente ein Abstand eingestellt werden. In einer weiteren zweckmässigen Ausgestaltung des Erfindungsgegenstandes wird deshalb auch vorgeschlagen, dass die Endflächen jedes Zwischenelements, in der Förderrichtung zu benachbarten Elementen mit einem Abstand von mindestens 0,2 mm, bevorzugt 0,5 mm, angeordnet sind. Dadurch können einzelne Zwischenelemente an einem Ende bewegt werden, ohne dass sie durch die Schrägstellung das benachbarte Element berühren. Ihr Bewegungsablauf wird somit nicht behindert. Um den freien Bewegungsablauf der Zwischenelemente zu gewährleisten ist auch zwischen den Führungszapfen und den an jedem Zwischenelement angeordneten Führungsbohrungen oder Führungsnuten ein entsprechendes Bewegungsspiel vorgesehen.

Vorzugsweise sind an den Endflächen jedes Zwischenelementes, in der Förderrichtung gesehen, reibungsreduzierende Elemente angeordnet. Geeignete reibungsreduzierende Elemente sind beispielsweise Beschichtungen aus Materialien mit besonders guten Gleiteigenschaften. Es ist aber auch möglich, zwischen zwei benachbarten Endflächen von Zwischenelementen Rollkomponenten anzuordnen, z.B. eine Kugel, und in den Endflächen entsprechende Rollbahnen vorzusehen.

Eine weitere bevorzugte Ausführungsform der Erfindung sieht vor, dass der Querschnitt der Führungsschiene C-förmig ist und der Querschnitt des Zwischenelementes T-förmig ist. Dabei wird das Kopfteil des T-förmigen Zwischenelementes in der C-Form der Führungsschiene gehalten und geführt. Das Zwischenelement kann sich dabei nur etwa rechtwinklig zu den Gleit- und Auflageflächen der Ablaufschienen bewegen und Bewegungen quer zur Förderrichtung werden verhindert. Eine weitere vorteilhafte Ausführungsform sieht vor, dass der Querschnitt der Führungsschienen U-förmig ist und der Querschnitt des Zwischenelementes kreisförmig oder rechteckförmig ist. Bei diesen Ausführungsformen ist das Zwischenelement zwischen den Schenkeln der U-förmigen Führungsschienen gehalten und geführt. Dabei kann sich das Zwischenelement auch hier nur etwa rechtwinklig zu den Gleit- und Auflageflächen der Ablaufschienen bewegen und Bewegungen quer zur Förderrichtung werden verhindert. Die Führungszapfen an der Führungsschiene können bei dieser Lösung zusätzliche Ausgestaltungen zur Halterung des Zwischenelementes aufweisen.

Die oben beschriebenen Vorrichtungen eignen sich grundsätzlich nicht nur für den Transport von Vorformlingen sondern auch für andere Stückgüter, welche einen Kragen oder Auflageflächen aufweisen und in gleichartiger Weise in einer Reihe entlang der Fördereinrichtung gefördert werden.

Im Folgenden wird die Erfindung anhand von Ausführungsbeispielen unter Bezugnahme auf die beiliegenden Zeichnungen näher erläutert. Es zeigen jeweils in schematischer Darstellung:
- Fig. 1: einen Längsschnitt durch einen Teil einer erfindungsgemässen Fördereinrichtung mit Ablaufschienen,
- Fig. 2: einen Querschnitt durch die Fördereinrichtung gemäss Fig 1,
- Fig. 3: einen ersten alternativen Querschnitt von Führungsschienen und Zwischenelement,
- Fig. 4: einen zweiten alternativen Querschnitt von Führungsschienen und Zwischenelement,
- Fig. 5: einen dritten alternativen Querschnitt von Führungsschienen und Zwischenelement, und
- Fig. 6: die Endbereiche benachbarter Zwischenelemente.

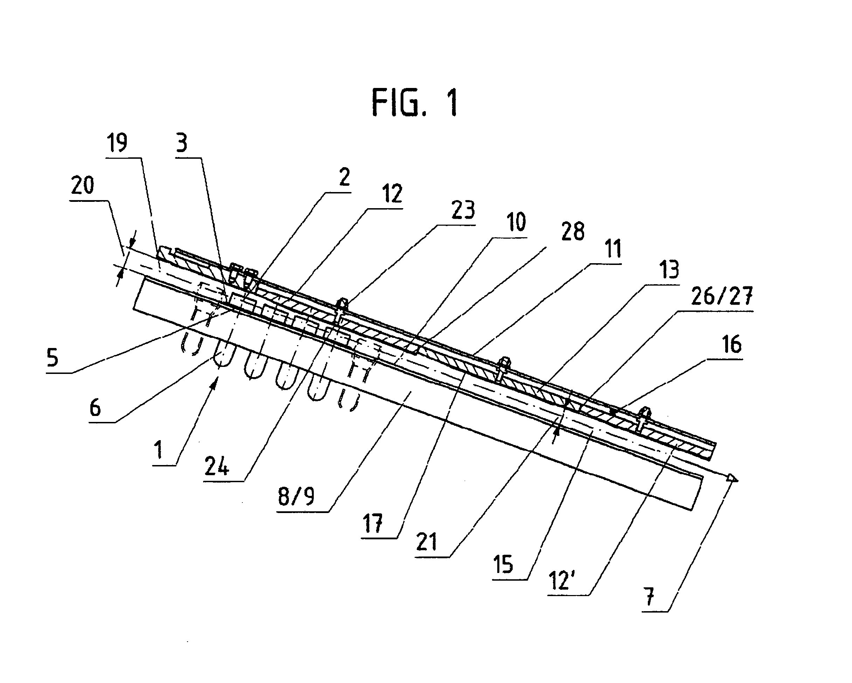

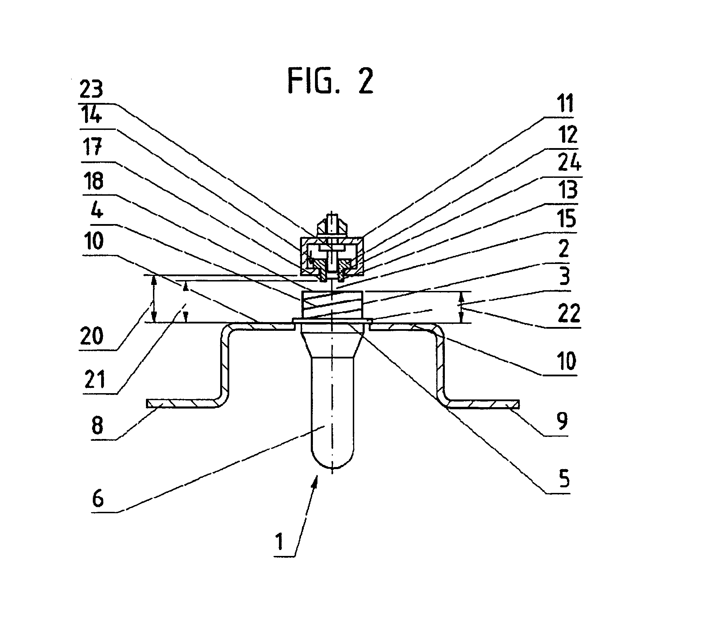

Fig. 1 zeigt einen Längsschnitt durch einen oberen Anfangsbereich einer erfindungsgemässen Fördereinrichtung mit zwei Ablaufschienen 8, 9 in schematischer Darstellung. Die beiden Ablaufschienen 8, 9 sind, senkrecht zur Bildebene gesehen, mit Abstand und parallel zueinander angeordnet, wobei nur eine der beiden Ablaufschienen 8, 9 sichtbar ist. Die nach oben gerichteten Flächen der beiden Ablaufschienen 8, 9 bilden dabei Gleit- und Auflageflächen 10. Zwischen den beiden Ablaufschienen 8, 9 sind Vorformlinge 1 geführt, welche in einer Reihe angeordnet sind und in Richtung des Pfeiles 7 durch die Fördereinrichtung gefördert werden. Im beschriebenen Beispiel handelt es sich um Vorformlinge aus Kunststoff für PET-Flaschen. Diese Vorformlinge 1 weisen einen Kopf 2, welcher einen Kragen 3 und ein Teil mit einem Gewinde 4 (siehe Fig. 2) umfasst, sowie ein unteres Teil 6 auf. Eine untere Fläche 5 der Kragen 3 der Vorformlinge 1 liegt dabei auf den Auflageflächen 10 der Ablaufschienen 8, 9 auf. Die beiden Ablaufschienen 8, 9 sind in Förderrichtung 7 geneigt angeordnet und schliessen einen Neigungswinkel gegenüber einer horizontalen Ebene ein. Dieser Neigungswinkel wird dabei so gewählt, dass die Vorformlinge 1 durch die Wirkung der Schwerkraft mit genügender Geschwindigkeit in Förderrichtung 7 von links oben nach rechts unten über die Ablaufschienen 8, 9 rutschen. Im dargestellten Beispiel beträgt dieser Neigungswinkel ca. 20°. Vor dem oberen Anfangsbereich 13 der Fördereinrichtung kann im beschriebenen Ausführungsbeispiel eine nicht dargestellte Prüfeinrichtung oder eine Vereinzelungseinrichtung oder eine Kurve zur Richtungsänderung, usw. für die Vorformlinge 1 angeordnet sein, von welcher die Vorformlinge 1 in bekannter Weise an die Ablaufschienen 8, 9 übergeben werden. Der untere Endbereich der Fördereinrichtung ist nicht dargestellt, wobei sich an diesen Bereich anschliessend eine Übernahmeeinrichtung, z.B. ein Drehteller oder eine Prüfeinrichtung oder eine Kurve zur Richtungsänderung, usw. befindet, welche die Vorformlinge 1 an eine Blasmaschine übergibt.

Über den Gleit- und Auflageflächen 10 der beiden Ablaufschienen 8, 9 ist mit einem Abstand 20 eine Führungsschiene 11 starr bzw. fest angeordnet. In dieser Führungsschiene 11 ist mindestens ein bewegliches Zwischenelement 12 angeordnet. Im gezeigten Beispiel sind mehrere zusätzliche Zwischenelemente 12' vorhanden, wobei alle Elemente 12, 12' in Förderrichtung 7 aneinandergereiht sind. Diese Zwischenelemente 12, 12' sind etwa rechtwinklig zu den Gleit- und Auflageflächen 10 der Ablaufschienen 8, 9 bewegbar. In einer Normallage bzw. in der Ausgangsposition, wie sie in Fig. 2 dargestellt ist, ragt ein Teilbereich 13 dieser Zwischenelemente 12, 12' in den Zwischenraum zwischen den Ablaufschienen 8, 9 und der Führungsschiene 11. Deshalb ist der Abstand 21 zwischen den Gleit- und Auflageflächen 10 und einer unteren Gleitfläche 17 an den Zwischenelementen 12, 12' kleiner als der Abstand 20 zwischen den Ablaufschienen 8, 9 und der Führungsschiene 11. Dieser Abstand 21 ist jedoch mindestens 0,1 mm grösser als die Höhe 22 des Kopfes 2 der Vorformlinge 1. Damit wird sichergestellt, dass beim normalen, ungestörten Durchlauf der Vorformlinge 1 durch die Fördereinrichtung keine direkte Berührung des Kopfes 2 der Vorformlinge 1 mit den Zwischenelementen 12, 12' stattfindet und die Vorformlinge 1 nicht durch zusätzliche Reibung gebremst werden. Sobald ein Vorformling 1 angehoben oder schräg gestellt wird, berührt der Kopf 2 das Zwischenelement 12, 12' und verschiebt dieses aus der Normallage bzw. Ausgangsposition nach oben.

An der Führungsschiene 11 ist für jedes Zwischenelement 12, 12' ein Führungszapfen 23 angeordnet, welcher in eine Führungsbohrung 24 in den Zwischenelementen 12, 12' eingreift. Zwischen dem Führungszapfen 23 und der Führungsbohrung 24 ist genügend Spiel vorgesehen, damit sich die Zwischenelemente 12, 12' unbehindert bewegen können. Mithilfe dieser Führungszapfen 23 werden die beweglichen Zwischenelemente 12,12' mit Bezug auf die Führungsschiene 11 positioniert und es wird verhindert, dass diese in Richtung der Neigung der Transporteinrichtung nach unten rutschen. Im Weiteren wird auch verhindert, dass eine untere Endfläche 26 der Zwischenelemente 12, 12' an einer nicht dargestellten Abschlussfläche der Führungsschiene 11 anstehen kann und sich gegenüber dieser verklemmt oder die Bewegungen rechtwinklig zu den Gleit- und Auflageflächen 10 behindert werden. Die mit den Bohrungen 24 zusammen wirkenden Führungszapfen 23 ermöglichen aber auch, die beweglichen Zwischenelemente 12, 12' so zu positionieren, dass zwischen benachbarten Zwischenelementen 12, 12', z.B. die untere Endfläche 26 des Zwischenelementes 12 gegenüber der oberen Endfläche des Zwischenelementes 12' einen Zwischenraum 28 aufweist. Dies verhindert Berührungen zwischen den Endflächen 26, 27 und ermöglicht die ungehinderte Beweglichkeit der Zwischenelemente 12, 12'.

Fig. 2 zeigt einen Querschnitt durch die erfindungsgemässe Fördereinrichtung gemäss Fig. 1 und zwar im Bereiche eines Führungszapfens 23. Sie zeigt die Ablaufschienen 8, 9 mit der Gleit- und Auflagefläche 10 und einen Vorformling 1, welcher sich im Zwischenraum zwischen den beiden Ablaufschienen 8, 9 befindet. Der Vorformling 1 liegt mit der unteren Fläche 5 des Kragens 3 auf den Gleitflächen 10 auf. Über den Ablaufschienen 8, 9 ist mit dem Abstand 20 die Führungsschiene 11 fest angeordnet, wobei sie im dargestellten Beispiel einen C-förmigen Querschnitt aufweist. In die Führungsschiene 11 ist das bewegliche Zwischenelement 12 eingelegt, welches im dargestellten Beispiel mit einem T-förmigen Querschnitt ausgebildet ist. Das Zwischenelement 12 ist über seinen oberen, breiten Teil in der Führungsschiene 11 gehalten und geführt. Der untere Teilbereich 13 des Zwischenelementes 12 ragt in den Zwischenraum 15 mit dem Abstand 20, zwischen Führungsschiene 11 und Ablaufschienen 8, 9, und weist einen Abstand 21 zu den Gleit- und Auflageflächen 10 auf. Dieser Abstand 21 ist mindestens 0,1 mm, im dargestellten Beispiel 2 mm, grösser als die Höhe 22 des Kopfes 2. Diese Position, mit dem Abstand 21, weist das bewegliche Zwischenelement 12 dann auf, wenn es nicht ausgelenkt bzw. nicht durch den Kopf 2 eines Vorformlings 1 angehoben wird. An der Führungsschiene 11 ist ein Führungszapfen 23 befestigt, welcher in eine Führungsbohrung 24 am Zwischenelement 12 eingreift. Führungszapfen 23 und Führungsbohrung 24 wirken zusammen und dienen der Positionierung und Führung des beweglichen Zwischenelementes 12, wie zu Fig. 1 beschrieben.

Gemäss der Erfindung hat die beschriebene Fördereinrichtung den Vorteil, dass sie kaum störungsanfällig ist und Vorformlinge 1, welche während des Fördervorgangs aus ihrer Normalposition ausgelenkt werden, wieder in die Normalposition zurückführt, ohne den Durchlauf der Vorformlinge 1 zu blockieren. Auslenkungen der Vorformlinge 1 aus der in den Figuren 1 und 2 dargestellten Normalposition können zum Beispiel auftreten, wenn am unteren Austrittsende der Fördereinrichtung die Vorformlinge 1 nicht kontinuierlich, sondern intermittierend übernommen werden. Dadurch entstehen in der Ablaufbewegung der Vorformlinge 1 in Förderrichtung 7 immer wieder kurze Unterbrüche, wodurch die Vorformlinge 1 aneinander anstossen und dadurch angehoben oder schräg gestellt werden können. Sobald dies geschieht, stossen sie mit dem Kopf 2, bzw. dessen oberen Endfläche 18 an die untere Gleitfläche 17 an den beweglichen Zwischenelementen 12, 12' an und können diese anheben. Im Gegensatz zu den bisher bekannten, starren Einrichtungen werden bei diesem Vorgang die Vorformlinge 1 nicht eingeklemmt und der Fördervorgang wird dadurch nicht gestoppt. Als Folge der Fortsetzung der Förderbewegung in Förderrichtung 7 und durch eine Kraftkomponente 14, welche auf die Zwischenelemente 12, 12' wirkt, werden die ausgelenkten Vorformlinge wieder in ihre Normalpositionen zurückgeführt. Dadurch kann der Fördervorgang ungehindert fortgesetzt werden und es entstehen keine Unterbrüche und damit keine Stillstände der Produktionsanlage. Die Kraftkomponente 14 wirkt etwa rechtwinklig zu den Gleit- und Auflageflächen 10 und wird im Normalfall durch die Schwerkraft bewirkt, welche auf die beweglichen Zwischenelemente 12, 12' einwirkt. Wenn diese durch die Schwerkraft bewirkte Kraftkomponente 14 nicht genügt, so kann zusätzlich ein Federelement 16 eingebaut werden, wie dies in Fig. 1 zum Zwischenelemente 12' dargestellt ist.

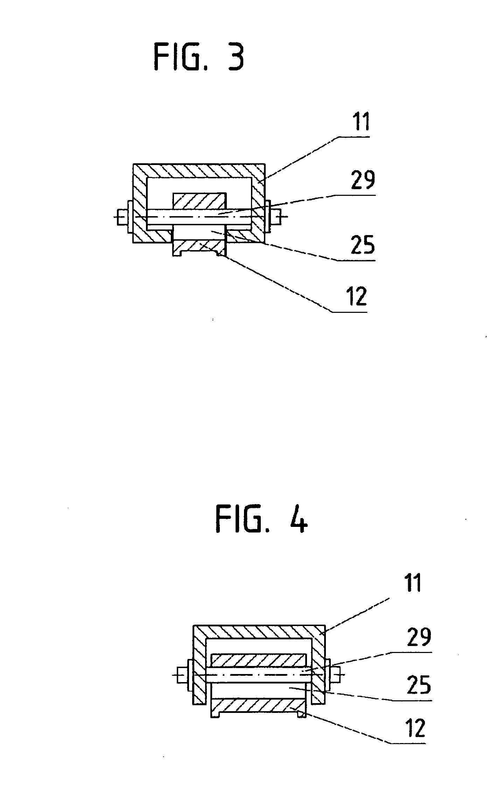

Fig. 3 zeigt eine alternative Kombination von Querschnittformen der Führungsschiene 11 und des beweglichen Zwischenelementes 12. Bei dieser Ausführungsform weist das Zwischenelement 12 einen rechteckförmigen Querschnitt auf. Bei dieser Ausführungsform ist ein Führungszapfen 29 quer zur Bewegungsrichtung des Zwischenelementes 12 angeordnet und wirkt mit einer Führungsnute 25 im Zwischenelement 12 zusammen. Alle übrigen Komponenten sind gleich ausgebildet und weisen die gleichen Funktionen auf wie zu den Figuren 1 und 2 beschrieben.

Fig. 4 zeigt eine weitere alternative Kombination von Querschnittformen der Führungsschiene 11 und des beweglichen Zwischenelementes 12. Bei dieser möglichen Lösung weist die Führungsschiene einen U-förmigen Querschnitt auf und der Querschnitt des beweglichen Zwischenelementes 12 ist rechteckförmig. Die Positionierung des rechteckförmigen Zwischenelementes 12, gegenüber der Führungsschiene 11, in Förderrichtung 7 kann hier ebenfalls mit der zu Fig. 3 gezeigten Kombination von Führungszapfen/Führungsnute 29/25 gelöst werden. Auch bei dieser Lösung sind die übrigen Komponenten gleich ausgebildet und weisen die gleichen Funktionen auf wie zu den Figuren 1 und 2 beschrieben.

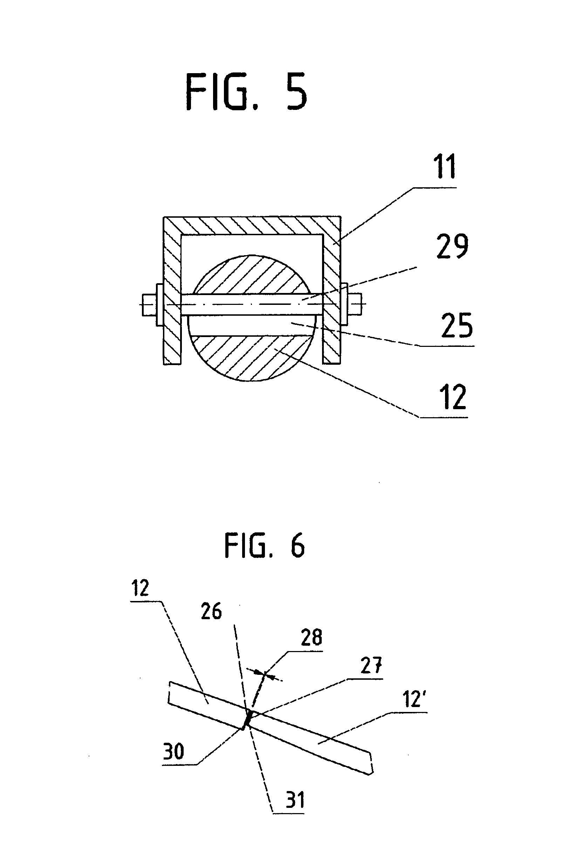

Fig. 5 zeigt eine alternative Kombination von Querschnittformen, wobei die Führungsschiene 11 ebenfalls einen U-förmigen Querschnitt aufweist und das bewegliche Zwischenelement 12 mit einem kreisförmigen Querschnitt ausgebildet ist. Die Positionierung des kreisförmigen Zwischenelementes 12 gegenüber der Führungsschiene 11 in Förderrichtung 7 kann hier ebenfalls mit der zu Fig. 3 gezeigten Kombination von Führungszapfen/Führungsnute 29/25 gelöst werden.

Fig. 6 zeigt eine vergrösserte Darstellung der Endbereiche von benachbarten Zwischenelementen 12, 12'. Aus dieser Darstellung ist erkennbar, dass die benachbarten Zwischenelemente 12, 12' einen Zwischenraum 28 zueinander aufweisen. Dieser Zwischenraum 28 beträgt mindestens 0,2 mm. Im dargestellten Beispiel sind 0,5 mm vorgesehen. Die beiden Endflächen 26, 27 der beiden Zwischenelemente 12, 12' sind mit Gleitplatten 30, 31 beschichtet. Diese Gleitplatten bestehen aus einem Material mit besonders guten Gleiteigenschaften, z.B. Teflon oder einer Chromverbindung. Es kann auch zweckmässig sein, die ganzen beweglichen Zwischenelemente 12, 12' mit einer Beschichtung und/oder Oberflächenveredelung zu versehen, z.B. Chrom, Chromverbindungen, Eloxieren, Harteloxieren oder geeignete Kunststoffbeschichtungen.

Als Materialien für die beweglichen Zwischenelemente 12, 12' und die Führungsschiene 11 können insbesondere Stahl bzw. Stahlverbindungen eingesetzt werden, es ist aber auch möglich, Aluminium oder Aluminiumverbindungen sowie Kunststoffe und Kombinationen dieser verschiedenen Materialien zu verwenden.

## Patentansprüche

1. Fördereinrichtung für zylindrische Körper, wie Vorformlinge (1) für Hohlkörper, in einer Transportstrecke, wobei die Vorformlinge (1) mindestens einen Kopf (2) mit einem Kragen (3) aufweisen, die Fördereinrichtung zwei parallel zueinander verlaufende, mit Abstand zueinander angeordnete und in Förderrichtung (7) geneigte Ablaufschienen (8, 9) umfasst, diese Ablaufschienen (8, 9) nach oben gerichteten Flächen aufweisen, welche eine Gleit- und Auflagefläche (10) für eine untere Fläche (5) der Kragen (3) der Vorformlinge (1) bilden und über den Gleit- und Auflageflächen (10) der beiden Ablaufschienen (8, 9) und mit Abstand zu diesen eine Führungsschiene (11) fest angeordnet ist, welche eine Höhenführung für den Kopf (2) der Vorformlinge (1) bildet, **dadurch gekennzeichnet, dass** in dieser Führungsschiene (11) mindestens ein bewegliches Zwischenelement (12, 12') geführt ist, dieses Zwischenelement (12, 12') etwa rechtwinklig zu den Gleit- und Auflageflächen (10) der Ablaufschienen (8, 9) bewegbar ist und ein Teilbereich (13) dieses Zwischenelementes (12, 12') in den Zwischenraum, zwischen den Gleit- und Auflageflächen (10) der Ablaufschienen (8, 9) und der Führungsschiene (11), ragt und ein Führungselement für den Kopf (2) der Vorformlinge (1) bildet und dass ein Kraftelement mit einer Kraftkomponente (14), welche in Richtung des Zwischenraumes gerichtet ist, auf das Zwischenelement (12, 12') einwirkt.

2. Fördereinrichtung nach Patentanspruch 1, **dadurch gekennzeichnet, dass** das Kraftelement, welches die Kraftkomponente (14) erzeugt, die Schwerkraft und/oder ein Federelement (16) ist.

3. Fördereinrichtung nach Patentansprüch 1 oder 2, **dadurch gekennzeichnet, dass**, in einer Ausgangsposition des Zwischenelementes (12, 12'), der freie Abstand (20) zwischen den Gleit- und Auflageflächen (10) der Ablaufschienen (8, 9) und der Führungsschiene (11) 1 mm grösser ist als der Abstand zwischen den Gleit- und Auflageflächen (10) und einer gegen die Ablaufschienen (8, 9) gerichteten Gleitfläche (17) am Zwischenelement (12, 12').

4. Fördereinrichtung nach einem der Patentansprüche 1 bis 3, **dadurch gekennzeichnet, dass** sich ein Zwischenelement (12) oder mehrere Zwischenelemente (12, 12') über die ganze Länge der Führungsschiene (11) erstreckt oder erstrecken.

5. Fördereinrichtung nach einem der Patentansprüche 1 bis 4, **dadurch gekennzeichnet, dass** an der Führungsschiene (11) mindestens ein Führungszapfen (23) und an jedem Zwischenelement (12, 12') mindestens eine Führungsbohrung (24) oder eine Führungsnute (25) angeordnet sind, welche zusammenwirken und das Zwischenelement (12, 12') in der Förderrichtung (7) positionieren.

6. Fördereinrichtung nach einem der Patentansprüche 1 bis 5, **dadurch gekennzeichnet, dass** die Endflächen (26, 27) jedes Zwischenelementes (12, 12'), in der Förderrichtung (7), zu benachbarten Elementen mit einem Abstand (28) von mindestens 0,2 mm angeordnet sind.

7. Fördereinrichtung nach einem der Patentansprüche 1 bis 6, **dadurch gekennzeichnet, dass** an den Endflächen (26, 27) jedes Zwischenelementes (12, 12'), in der Förderrichtung (7) gesehen, reibungsreduzierende Elemente (30, 31) angeordnet sind.

8. Fördereinrichtung nach einem der Patentansprüche 1 bis 7, **dadurch gekennzeichnet, dass** der Querschnitt der Führungsschiene (11) C-förmig ist und der Querschnitt des Zwischenelementes (12, 12') T-förmig ist.

9. Fördereinrichtung nach einem der Patentansprüche 1 bis 7, **dadurch gekennzeichnet, dass** der Querschnitt der Führungsschiene (11) U-förmig ist und der Querschnitt des Zwischenelementes (12, 12') kreisförmig oder rechteckförmig ist.

10. Verwendung einer Fördereinrichtung nach einem der Patentansprüche 1 bis 9, wobei der Abstand zwischen den Gleit-und Auflageflächen (10) der Ablaufschienen (8, 9) und einer gegen die Ablaufschienen (8, 9) gerichteten Gleitfläche (17) am Zwischenelement (12, 12') mindestens 0,1 mm grösser ist als die Höhe (22) des Kopfes (2) der Vorformlinge (1) zwischen der unteren Fläche (5) des Kragens (3) und einer oberen Endfläche (18) des Kopfes (2).

## Claims

1. Conveying device for cylindrical members, such as parisons (1) for hollow objects, on a transporting route, the parisons (1) having at least one head (2) with a collar (3), the conveying device comprising two running rails (8, 9), which extend parallel to one another and are located at a spacing from one another and are inclined in the direction of travel (7), said running rails (8, 9) having upward-facing surfaces which form a sliding and supporting surface (10) for a lower surface (5) of the collars (3) of the parisons (1), and a guide rail (11) being fixedly located above and at a spacing from the sliding and supporting surfaces (10) of the two running rails (8, 9), said guide rail (11) forming a height guide for the head (2) of the parisons (1), **characterized in that** at least one movable intermediate element (12, 12') is guided in said guide rail (11), said intermediate element (12, 12') is movable approximately at right angles in relation to the sliding and supporting surfaces (10) of the running rails (8, 9), and a part-region (13) of said intermediate element (12, 12') protrudes into the intermediate space between the sliding and supporting surfaces (10) of the running rails (8, 9) and the guide rail (11), and forms a guide element for the head (2) of the parisons (1), and **in that** an element of force having a force component (14), which is directed toward the intermediate space, acts on the intermediate element (12, 12').

2. Conveying device according to Claim 1, **characterized in that** the element of force which generates the force component (14) is gravity and/or a spring element (16).

3. Conveying device according to Claim 1 or 2, **characterized in that**, in an initial position of the intermediate element (12, 12'), the free spacing (20) between the sliding and supporting surfaces (10) of the running rails (8, 9) and the guide rail (11) is 1 mm larger than the spacing between the sliding and supporting surfaces (10) and a sliding surface (17) on the intermediate element (12, 12'), said sliding surface being directed toward the running rails (8, 9).

4. Conveying device according to one of Claims 1 to 3, **characterized in that** one intermediate element (12) or more intermediate elements (12, 12') extends or extend over the entire length of the guide rail (11).

5. Conveying device according to one of Claims 1 to 4, **characterized in that** at least one guide pin (23) is located on the guide rail (11), and at least one guide bore (24) or one guide groove (25) is located on each intermediate element (12, 12'), said guide pin (23) and guide bore (24) or guide groove (25) interacting and positioning the intermediate element (12, 12') in the direction of travel (7).

6. Conveying device according to one of Claims 1 to 5, **characterized in that** the end surfaces (26, 27) of each intermediate element (12, 12') are located at a spacing (28) of at least 0.2 mm from adjacent elements, as seen in the direction of travel (7).

7. Conveying device according to one of Claims 1 to 6, **characterized in that** friction-reducing elements (30, 31) are located on the end surfaces (26, 27) of each intermediate element (12, 12'), as seen in the direction of travel (7).

8. Conveying device according to one of Claims 1 to 7, **characterized in that** the cross section of the guide rail (11) is C-shaped and the cross section of the intermediate element (12, 12') is T-shaped.

9. Conveying device according to one of Claims 1 to 7, **characterized in that** the cross section of the guide rail (11) is U-shaped and the cross section of the intermediate element (12, 12') is circular or rectangular.

10. Use of a conveying device according to one of Claims 1 to 9, the spacing between the sliding and supporting surfaces (10) of the running rails (8, 9) and a sliding surface (17) on the intermediate element (12, 12'), said sliding surface being directed toward the running rails (8, 9), being at least 0.1 mm larger than the height (22) of the head (2) of the parisons (1) between the lower surface (5) of the collar (3) and an upper end surface (18) of the head (2).

## Revendications

1. Dispositif de transport pour des corps cylindriques, tels que des préformes (1) pour corps creux, dans un tronçon de transport, les préformes (1) comportant au moins une tête (2) dotée d'un col (3), le dispositif de transport comprenant deux rails de roulement (8, 9) s'étendant parallèlement l'un par rapport à l'autre, disposés à une certaine distance l'un de l'autre et inclinés dans la direction de transport (7), ces rails de roulement (8, 9) comportant des surfaces orientées vers le haut formant une surface de glissement et d'appui (10) pour une surface inférieure (5) du col (3) des préformes (1) et un rail de guidage (11) étant disposé fixement au-dessus les surfaces de glissement et d'appui (10) des deux rails de roulement (8, 9) et à une certaine distance par rapport à eux, ledit rail formant un guide en hauteur pour la tête (2) des préformes (1), **caractérisé en ce qu'**au moins un élément intermédiaire (12, 12') mobile est guidé dans ce rail de guidage (11), cet élément intermédiaire (12, 12') pouvant être déplacé approximativement à angle droit par rapport aux surfaces de glissement et d'appui (10) des rails de roulement (8, 9) et une partie (13) de cet élément intermédiaire (12, 12') saillant dans l'espace intermédiaire entre les surfaces de glissement et d'appui (10) des rails de roulement (8, 9) et du rail de guidage (11) et formant un élément de guidage pour la tête (2) des préformes (1) et **en ce qu'**un élément d'effort agit sur l'élément intermédiaire (12, 12') avec une certaine composante d'effort (14) orientée en direction de l'espace intermédiaire.

2. Dispositif de transport selon la revendication 1, **caractérisé en ce que** l'élément d'effort produisant la composante d'effort (14) est la pesanteur et/ou un élément à ressort (16).

3. Dispositif de transport selon la revendication 1 ou 2, **caractérisé en ce que** dans une position de sortie de l'élément intermédiaire (12, 12'), la distance libre (20) entre les surfaces de glissement et d'appui (10) des rails de roulement (8, 9) et du rail de guidage (11) est supérieur de 1 mm à la distance présente entre les surfaces de glissement et d'appui (10) et une surface de glissement (17) orientée vers les rails de roulement (8, 9) au niveau de l'élément intermédiaire (12, 12').

4. Dispositif de transport selon l'une quelconque des revendications 1 à 3, **caractérisé en ce qu'**un élément intermédiaire (12) ou plusieurs éléments intermédiaires (12, 12') s'étend ou s'étendent sur toute la longueur du rail de guidage (11).

5. Dispositif de transport selon l'une quelconque des revendications 1 à 4, **caractérisé en ce qu'**au moins un tenon de guidage (23) est disposé au niveau du rail de guidage (11) et qu'au moins un alésage de guidage (24) ou une encoche de guidage (25) sont disposés au niveau de l'élément intermédiaire (12, 12'), ces éléments interagissant et positionnant l'élément intermédiaire (12, 12') dans la direction de transport (7).

6. Dispositif de transport selon l'une quelconque des revendications 1 à 5, **caractérisé en ce que** les surfaces d'extrémité (26, 27) de chaque élément intermédiaire (12, 12') sont disposées dans la direction de transport (7), par rapport aux éléments connexes, à une certaine distance (28) d'au moins 0,2 mm.

7. Dispositif de transport selon l'une quelconque des revendications 1 à 6, **caractérisé en ce que** des éléments (30, 31) de réduction de frottement sont disposés au niveau des surfaces d'extrémité (26, 27) de chaque élément intermédiaire (12, 12'), vus dans la direction de transport (7).

8. Dispositif de transport selon l'une quelconque des revendications 1 à 7, **caractérisé en ce que** la section transversale du rail de guidage (11) est en forme de C et que la section transversale de l'élément intermédiaire (12, 12') est en forme de T.

9. Dispositif de transport selon l'une quelconque des revendications 1 à 7, **caractérisé en ce que** la section transversale du rail de guidage (11) est en forme de U et que la section transversale de l'élément intermédiaire (12, 12') est en forme de cercle ou en forme de rectangle.

10. Utilisation d'un dispositif de transport selon l'une quelconque des revendications 1 à 9, la distance entre les surfaces de glissement et d'appui (10) des rails de roulement (8, 9) et une surface de glissement (17) orientée vers les rails de roulement (8, 9) étant supérieure au niveau de l'élément intermédiaire (12, 12') d'au moins 0,1 mm à la hauteur (22) de la tête (2) des préformes (1), entre la surface inférieure (5) du col (3) et une surface d'extrémité (18) supérieure de la tête (2).
